(19) Europäisches Patentamt

European Patent Office

Office européen des brevets

(11) **EP 0 727 887 B1**

(12) **EUROPÄISCHE PATENTSCHRIFT**

(45) Veröffentlichungstag und Bekanntmachung des Hinweises auf die Patenterteilung:
**28.08.2002 Patentblatt 2002/35**

(51) Int Cl.⁷: **H04J 3/06**, H04J 3/07

(21) Anmeldenummer: **96102247.2**

(22) Anmeldetag: **15.02.1996**

(54) **Stopfeinrichtung für synchrones digitales Übertragungssystem**

Justification device for synchronous digital transmission system

Dispositif de justification pour système de transmission numérique synchrone

(84) Benannte Vertragsstaaten:
**CH DE ES FR GB IT LI SE**

(30) Priorität: **16.02.1995 US 389308**
**26.04.1995 DE 19515344**

(43) Veröffentlichungstag der Anmeldung:
**21.08.1996 Patentblatt 1996/34**

(73) Patentinhaber: **ALCATEL**
**75008 Paris (FR)**

(72) Erfinder:
• **Owen, Henry W. L.**
**Smyrna, Georgia 30080 (US)**
• **Sholander, Peter E.**
**North Merrick, N.Y. 11566 (US)**

(74) Vertreter: **Urlichs, Stefan, Dipl.-Phys.**
**Alcatel**
**Intellectual Property Department,**
**Stuttgart**
**70430 Stuttgart (DE)**

(56) Entgegenhaltungen:
**EP-A- 0 584 627     EP-A- 0 652 657**

• **SHOLANDER P ET AL: "SONET/SDH ADAPTIVE THRESHOLD POINTER PROCESSOR CLOCKING STRATEGIES" PROCEEDINGS OF THE GLOBAL TELECOMMUNICATIONS CONFERENCE (GLOBECOM), SAN FRANCISCO, NOV. 28 - DEC. 2, 1994, Bd. VOL. 2, 28. November 1994, Seiten 1171-1174, XP000488720 INSTITUTE OF ELECTRICAL AND ELECTRONICS ENGINEERS**
• **VOLEJNIK W: "PHASENKONSTANZ SICHERT UEBERTRAGUNGSQUALITAET" TELCOM REPORT, Bd. 17, Nr. 5, 1. September 1994, Seiten 204-207, XP000474840**
• **OWEN H L: "SYNCHRNOUS DIGITAL HIERARCHY BYTE POINTER JUSTIFICATION VERSUS VC-12 PAYLOAD BIT JUSTIFICATION EFFECTS" EUROPEAN TRANSACTIONS ON TELECOMMUNICATIONS AND RELATED TECHNOLOGIES, Bd. 6, Nr. 1, 1. Januar 1995, Seiten 97-105, XP000502753**

**Beschreibung**

Die Erfindung betrifft ein synchrones digitales Übertragungssystem gemäß dem Oberbegriff des Patentanspruchs 1 und ein Verfahren zum Auslösen von Stopfaktionen gemäß dem Oberbegriff des Patentanspruchs 5. Außerdem betrifft die Erfindung eine Stopfeinrichtung gemäß dem Oberbegriff des Patentanspruchs 2 für ein synchrones digitales Übertragungssystem.

Ein synchrones digitales Übertragungssystem ist z.B. ein Übertragungssystem für synchrone digitale Hierarchie. In einem solchen Übertragungssystem für die synchrone digitale Hierarchie (SDH) werden zu übertragende Signale nach einem bestimmten Muster zusammengefaßt und nach Rahmen strukturiert. Ein solcher Rahmen wird bei SDH als synchrones Transportmodul STM-N bezeichnet; es ist z.B. in der CCITT-Empfehlung "Recommendation G.707, G.708 und G.709" beschrieben. Der Rahmen besteht aus 270 Spalten und 9 Zeilen. In jeder Spalte einer Zeile ist jeweils ein Byte enthalten: In den Zeilen 1 bis 3 und 5 bis 9 ist jeweils in den Spalten 1 bis 9 der sogenannte "Section Overhead" (SOH) für Steuerungs- und Fehlererkennungsinformationen vorgesehen. In der vierten Zeile von Spalte 1 bis 9 ist eine Zeigerverwaltungseinheit vorgesehen, die als "AU-Pointer" (AU-P) bezeichnet ist. In den restlichen Spalten und Zeilen ist die Nutzinformation, die "STM-1-Payload" untergebracht. Eine STM-1-Payload ist z.B. in einem virtuellen Container VC-4 untergebracht, der aus einem Bereich für Nutzinformation und einem Bereich für Steuerungsinformation (Path Overhead, POH) besteht.

Weitere in SDH festgelegte Einheiten sind z. B. Administrative Units, z.B. AU-4, die aus einem virtuellen Container VC und einem AU-Zeiger (AU-Pointer) zusammengesetzt sind, und Tributary Units, z.B. TU-12, die aus einem virtuellen Container und einem TU-Zeiger (TU-Pointer) zusammengesetzt sind.

STM-N-Signale werden über eine Übertragungsstrecke gesendet, die in bestimmten Abständen, z.B. an Netzknoten, Schaltungen aufweist, in denen ein ankommendes STM-N Signal an einen lokalen (internen) standardisierten Takt des Netzknotens angepaßt wird. Diese Schaltungen führen eine Taktanpassung durch ein bekanntes Bytestopfverfahren aus. Hierbei werden an fest vorgegebenen Stellen des Rahmens (Bytes H1, H2) bei Bedarf Stopfbytes eingesetzt (Recommendation G.709). Bei einem positiven Stopfvorgang wird an der Stopfstelle die Nutzinformation ausgelassen und bei einem negativen Stopfvorgang wird in die Stopfstelle Nutzinformation gesetzt. Ein Stopfvorgang wird auch als Pointer-Aktion bezeichnet.

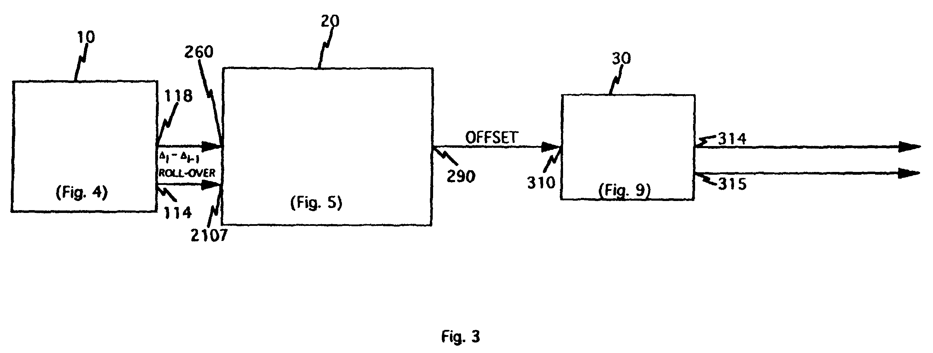

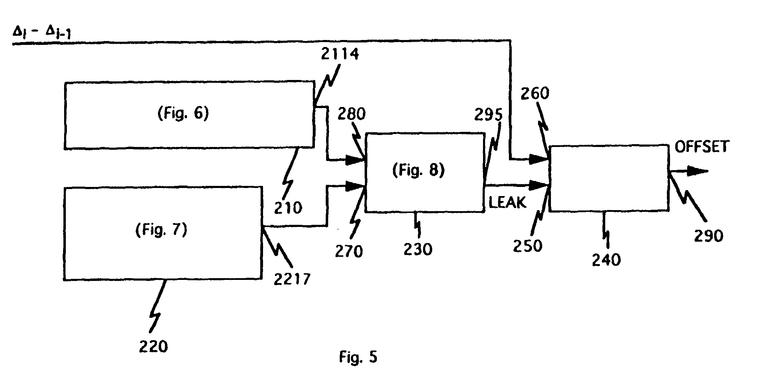

Eine Untersuchung dieser Pointer-Aktionen anhand eines Modells eines SDH-Übertragungssystems ist bekannt aus: Henry L. Owen und Thomas M. Klett, "Synchronous digital hierarchy network pointer simulation", Computer Networks and ISDN Systems 26, 1994, Seiten 481 bis 491. Das in der dortigen Fig. 3 gezeigte Modell besteht aus einer Anzahl von Netzknoten 1, ..., N-1. Am Netzknoten 1 werden Signale (Telefon, Video, Computer Data) dem Netzwerk zugeführt und in einem "mapper" (synchronizer) zu SDH-Signalen" zusammengefügt. Jedem Netzknoten N ist ein interner Takt zugeordnet. Ein Modell eines Netzknotens N ist in der dortigen Fig. 5 gezeigt. Einem elastischen Speicher (First-In, First-Out, FIFO) wird ein Rahmen eines Eingangssignals zugeführt, das den Takt des vorhergehenden Netzknotens N-1 hat. Mit diesem Takt werden die Bytes in den Speicher geschrieben und mit dem Takt des Netzknotens N werden die Bytes aus dem Speicher gelesen. Ob ein Byte in den Speicher geschrieben wird, hängt davon ab, ob es ein Nutzsignal- oder ein "overhead"-Byte ist. Im Falle einer AU-4 werden alle Nutzsignal-Bytes in denselben Speicher geschrieben und in anderen Fällen gibt es verschiedene Speicher für verschiedene Arten von Nutzsignalen. Die Anzahl der Bytes im Speicher bestimmt, wann der Speicher zu voll oder zu leer ist. Mit Hilfe eines definierten oberen und unteren Schwellenwertes werden Pointer-Aktionen ausgelöst, die von einer Stopfeinrichtung (Pointer Request Generator, Pointer Processor) gesteuert werden. Bei diesen Pointer-Aktionen kann es zu störenden Effekten kommen, die Phasenschwankungen verursachen. Diese Effekte sind z.B. beschrieben in: Henry L. Owen und Peter E. Sholander, "Methodology and Results of Synchronous Digital Hierarchy Network Payload Jitter Simmulation", SIMULATION, January 1995, Seiten 1 bis 8. Zu diesen Effekten gehören u.a. der 87/3-Effekt und der 35/1-Effekt. Diese Effekte treten auf, wenn sich ein Netzknoten nach Ausfall einer externen Synchronisierungsquelle in einem Wartezustand (Holdover) befindet und eine Stopfeinrichtung die Pointer-Aktionen abhängig vom Füllstand eines Speichers mit festen Schwellenwerten ableitet. Im Wartezustand kann es zu Taktunterschieden von bis zu +/- 4,6 ppm kommen.

Für den 87/3-Effekt bedeutet das, daß es bedingt durch die STM-1 Rahmenstruktur 87 Pointer-Aktionen in regelmäßigen Abständen D gibt, denen eine Lücke von 4D folgt, in der keine Pointer-Aktionen auftreten. Diese Lücke entspricht drei fehlenden Pointer-Aktionen, woraus sich die Bezeichnung 87/3-Effekt ergibt.

Der entsprechende Effekt für einen TU-12 ist der 35/1-Effekt, für einen TU-11 ist es der 261 Effekt und für einen TU-3 ist es der (85/3+2)-Effekt.

In den Artikeln "Phasenkonstanz sichert Übertragungsqualität" von W. Volejnik, Telcom Report (Siemens) Bd. 17, Nr.5, 1.Sept. 1994, Seiten 204-207 und P. Sholander, H. Owen "SONET/SDH Adaptive Threshold Pointer Processor Clocking Strategies", Proceedings of the Global Telecommunications Conference, Nov.28-Dec.02 1994 Vol.2, Seiten 1171-1174 sind ebenfalls verschiedene Stopfverfahren beschrieben, bei denen der Füllstand eines Pufferspeichers, in den nur die im Nutzlastbereich der Übertragungsrahmen enthaltenen Multiplexeinheiten (VC-N) geschrieben werden, mit einem oberen und unteren Schwellenwert verglichen wird. Dieser Schwellenwert kann dabei entweder fest sein oder moduliert werden (adaptive threshold). Bei sogenannten integrierten Entscheidern wird zusätzlich zum augenblicklichen Datenvorrat auch dessen vorhergehender zeitlicher Verlauf berücksichtigt, um die Stopfentscheidungen möglichst gleichmäßig über die Zeit zu verteilen. Da bei diesen Verfahren stets der Füllstand des Pufferspeichers betrachtet wird, treten jedoch auch bei diesen Stopfverfahren die vorstehend geschilderten 87/3- oder 35/1- Effekte auf, wenn aufgrund einer Störung der externen Synchronisation Taktunterschiede auftreten.

Ein Verfahren, um in einem Übertragungssystem für die synchrone digitale Hierarchie Phasenschwankungen zu reduzieren, ist bekannt aus: Y. Rokugo et al, "Jitter Reduction for Asynchronous Network Application of Synchronous Digital Hierarchy", Electronics and Communications in Japan, Part 1, Vol. 76, No. 5, 1993, Seiten 23 bis 32. Das daraus bekannte Verfahren verwendet einen Frequenzanalysator, mit dem direkt ein Mittelwert der innerhalb der letzten KT Sekunden ankommenden positiven und negativen Pointer-Aktionen berechnet wird. Ankommende AU-3 Pointer-Aktionen werden verwendet, um den Frequenzunterschied zwischen zwei (End-)Netzknoten (desynchronizer node und mapper node) zu schätzen. Wird dieses Verfahren bei einem Zwischennetzknoten i verwendet, wird nur der Frequenzunterschied zwischen dem Netzknoten i-1 und dem (End-)Netzknoten (mapper node) geschätzt. Der VC-3 Pufferfüllstand hängt jedoch vom Frequenzunterschied zwischen dem Netzknoten i und dem (End-) Netzknoten (mapper node) ab, so daß es daher zu einem Über order Unterlauf des Puffers kommen kann. Außerdem verwendet das Verfahren konstante Werte für K und T, so daß der Frequenzanalysator ein lineares zeitinvariantes Digitalfilter ist.

Eine Aufgabe der Erfindung ist, ein Übertragungssystem für die synchrone digitale Hierarchie anzugeben, bei dem die genannten störenden Effekte nicht auftreten. Ein die Aufgabe lösendes Übertragungssystem ist Gegenstand des Patentanspruchs 1. Außerdem ist es eine Aufgabe der Erfindung, eine Stopfeinrichtung für Übertragungssysteme gemäß dem Patentanspruch 1 anzugeben. Ein diese Aufgabe lösende Stopfeinrichtung ist Gegenstand des Patentanspruchs 2. Zusätzlich ist es eine Aufgabe der Erfindung, ein Verfahren zum Auslösen von Stopfaktionen für ein Übertragungssystem gemäß den Patentanspruch 1 und für eine Stopfeinrichtung gemäß dem Patentanspruch 2 anzugeben. Ein dieses Aufgabe lösendes Verfahren ist Gegenstand des Patentanspruchs 5.

Vorteilhafte Ausgestaltungen der Erfindung sind in den Unteransprüchen angegeben.

Die Erfindung wird im folgenden beispielhaft anhand von Figuren näher erläutert. Es zeigen:

Fig. 1    ein erstes Diagramm zur Erläuterung des Verfahrens zum Auslösen von Stopfaktionen,

Fig. 2    ein zweites Diagramm zur Erläuterung des Verfahrens zum Auslösen von Stopfaktionen,

Fig. 3    ein aus drei Blöcken (10, 20, 30) bestehende Darstellung der Stopfvorrichtung,

Fig. 4    eine detailliertere Darstellung des ersten Blockes (10) aus Fig. 3,

Fig. 5    eine detailliertere Darstellung des zweiten Blockes (20) aus Fig. 3,

Fig. 6    eine Darstellung einer im zweiten Block (20) enthaltenen ersten Zähleinrichtung,

Fig. 7    eine Darstellung einer im zwieten Block (20) enthaltenen zweiten Zähleinrichtung,

Fig. 8    eine Darstellung einer ebenfalls im zweiten Block (20) enthaltenen Einrichtung zur Berechnung eines Korrekturfaktors (LEAK),

Fig. 9    eine detailliertere Darstellung des dritten Blockes (30),

Fig. 10   eine Darstellung einer im dritten Block (30) enthaltenen ersten Vergleichseinrichtung,

Fig. 11   eine Darstellung einer ebenfalls im dritten Block (30) enthaltenen zweiten Vergleichseinrichtung.

Gemäß dem Grundgedanken der Erfindung werden Rahmenbytes eines ankommenden Signals und Rahmenbytes eines ausgesendeten Signals gezählt, um daraus zu festgelegten Zeitpunkten einen Differenzwert und eine Änderung dieses Differenzwertes zu berechnen. Auf diese Weise wird ein Änderungswert bestimmt, der zu bestimmten Abtastzeitpunkten mit einem oberen und unteren Schwellenwert verglichen: Ist der Änderungswert kleiner als der untere Schwellenwert, wird eine positive Stopfaktion ausgelöst. Ist der Änderungswert größer als der obere Schwellenwert, wird eine negative Stopfaktion ausgelöst.

Als Folge einer Stopfaktion können entweder die Schwellenwerte um einen konstanten Wert erhöht oder erniedrigt werden, oder es kann der Änderungswert um einen konstanten Wert verändert werden.

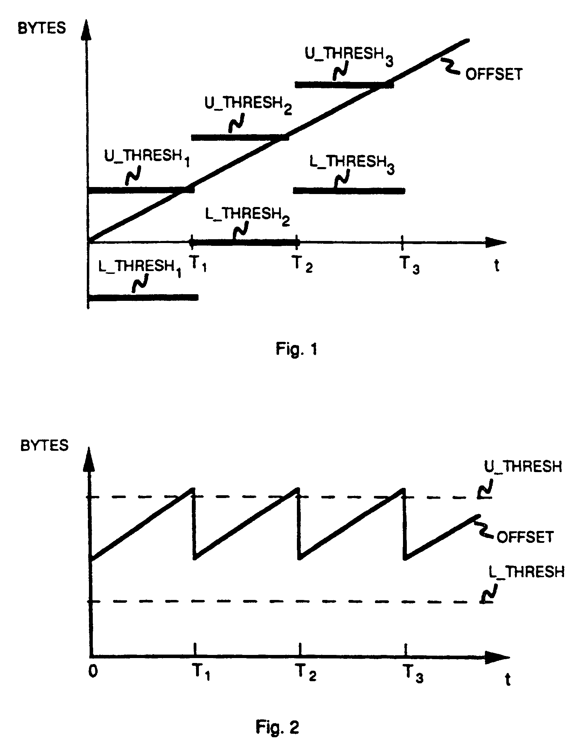

In Fig. 1 und Fig. 2 sind Diagramme zur Erläuterung dieses Grundgedankens gezeigt. Es ist jeweils der Änderungswert OFFSET als Funktion der Zeit t dargestellt.

In Fig. 1 ist der Änderungswert OFFSET beispielhaft als Ursprungsgerade eingezeichnet. Ebenfalls sind obere Schwellenwerte $U\_THRESH_i$ (i = 1, 2, 3) und

untere Schwellenwerte $L\_THRESH_i$ (i = 1, 2, 3) als waagerechte Linien eingezeichnet. Um miteinander verglichen werden zu können, entsprechen die Schwellenwerte $U\_THRESH_i$, $L\_THRESH_i$ und der Änderungswert OFFSET einer Anzahl von Bytes. Zu einem ersten Abfragezeitpunkt $T_1$ ist der Änderungswert OFFSET größer als der erste obere Schwellenwert $U\_THRESH_1$, mit der Folge, daß eine negative Stopfaktion ausgelöst wird und die Schwellenwerte $U\_THRESH_1$, $L\_THRESH_1$ um einen konstanten Wert erhöht werden; aus $U\_THRESH_1$, $L\_THRESH_1$ gehen nach der Erhöhung die zweiten Schwellenwerte $U\_THRESH_2$, $L\_THRESH_2$ hervor. Zu einem zweiten Abfragezeitpunkt $T_2$ wird ebenfalls eine negative Stopfaktion ausgelöst und es werden die Schwellenwerte $U\_THRESH_2$, $L\_THRESH_2$ um den konstanten Faktor erhöht; es ergeben sich die dritten Schwellenwerte $U\_THRESH_3$, $L\_THRESH_3$. Auf den Betrag des konstanten Wertes (THRESHOLD FACTOR) wird an anderer Stelle eingegangen.

In Fig. 2 sind dagegen die Schwellenwerte U_THRESH, L_THRESH konstant. Hier wird der Änderungswert OFFSET um einen konstanten Wert verändert; die den Änderungswert OFFSET darstellende Ursprungsgerade hat dabei z.B. die gleiche Steigung wie in Fig. 1. Zum ersten Abfragezeitpunkt $T_1$ ist der Änderungswert OFFSET größer als der obere Schwellenwert U_THRESH, wodurch eine negative Stopfaktion ausgelöst wird. Als Folge davon wird der Änderungswert OFFSET um den konstanten Wert herabgesetzt. Zum zweiten Abfragezeitpunkt $T_2$ ist der Änderungswert OFFSET erneut größer als der obere Schwellenwert $U\_THRESH_1$, wodurch ebenfalls eine negative Stopfaktion ausgelöst wird. Auch zum dritten Abfragezeitpunkt $T_3$ ist der Änderungwert OFFSET wieder größer als der obere Schwellenwert U_THRESH, wodurch wieder eine negative Stopfaktion ausgelöst und der Änderungswert OFFSET um den konstanten Wert herabgesetzt wird.

Entsprechend den in Fig. 1 und Fig. 2 gezeigten Diagrammen könnten auch für positive Stopfaktionen Diagramme erstellt werden, um den Grundgedanken der Erfindung zu erklären. Zu einer positiven Stopfaktion kommt es dann, wenn zu einem Abfragezeitpunkt $T_i$ der Änderungswert OFFSET kleiner als der untere Schwellenwert L_THRESH ist. In diesem Fall werden die Schwellenwerte $U\_THRESH_1$ $L\_THRESH_1$ um einen konstanten Wert herabgesetzt. Bei konstanten Schwellenwerten U_THRESH, L_THRESH kann in diesem Fall der Änderungswert OFFSET um den konstanten Wert erhöht werden.

Im folgenden wird der strukturelle Aufbau der Stopfeinrichtung anhand der Fig. 3 bis Fig. 11 beschrieben. Im Anschluß daran erfolgt eine Beschreibung der Funktion der Stopfeinrichtung.

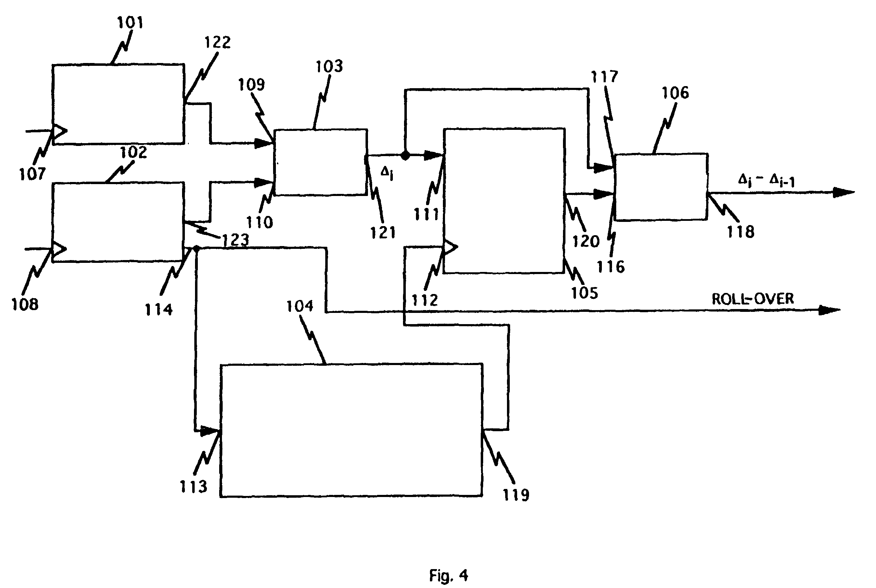

In Fig. 3 ist eine aus drei Blöcken 10, 20, 30 bestehende Darstellung einer Stopfeinrichtung gezeigt. Der erste Block 10 ist eine Einrichtung, die eine Änderung $\Delta_i - \Delta_{i-1}$ eines Differenzwertes $\Delta_i$ zwischen einem

zu speichernden Rahmenbyte und einem zu lesenden Rahmenbyte berechnet. Diese Änderung $\Delta_i - \Delta_{i-1}$ des Differenzwertes $\Delta_i$ tritt an einem Ausgang 118 aus. An einem weiteren Ausgang 114 tritt ein Überlaufindikator ROLL-OVER aus. Details dieses Blocks 10 sind in Fig. 4 gezeigt.

Der zweite Block 20 ist eine Einrichtung, die den Änderungswert OFFSET berechnet, der von der Änderung $\Delta_i - \Delta_{i-1}$ des Differenzwertes $\Delta_i$ und einem ebenfalls im zweiten Block 20 berechneten Korrekturfaktor LEAK abhängig ist. An einem Ausgang 290 tritt der Änderungswert OFFSET aus dem zweiten Block 20 aus. Einem mit dem Ausgang 118 des ersten Blockes 10 verbundenen Eingang 260 des zweiten Blockes 20 wird die Änderung $\Delta_i - \Delta_{i-1}$ des Differenzwertes $\Delta_i$ zugeführt, und einem mit dem Ausgang 114 des ersten Blocks 10 verbundenen Eingang 2107 des zweiten Blocks 20 wird der Überlaufindikator ROLL-OVER zugeführt. Details des zweiten Blocks 20 sind in Fig. 5, Fig. 6, Fig. 7 und Fig. 8 gezeigt.

Der dritte Block 30 ist eine Einrichtung, die zu bestimmten Abfragezeitpunkten $T_i$ den Änderungswert OFFSET mit den beiden Schwellenwerten U_THRESH, L_THRESH vergleicht, eine positive Stopfaktion auslöst, wenn der Änderungswert OFFSET kleiner als der untere Schwellenwert L_THRESH ist, und eine negative Stopfaktion auslöst, wenn der Änderungswert OFFSET größer als der obere Schwellenwert U_THRESH ist.

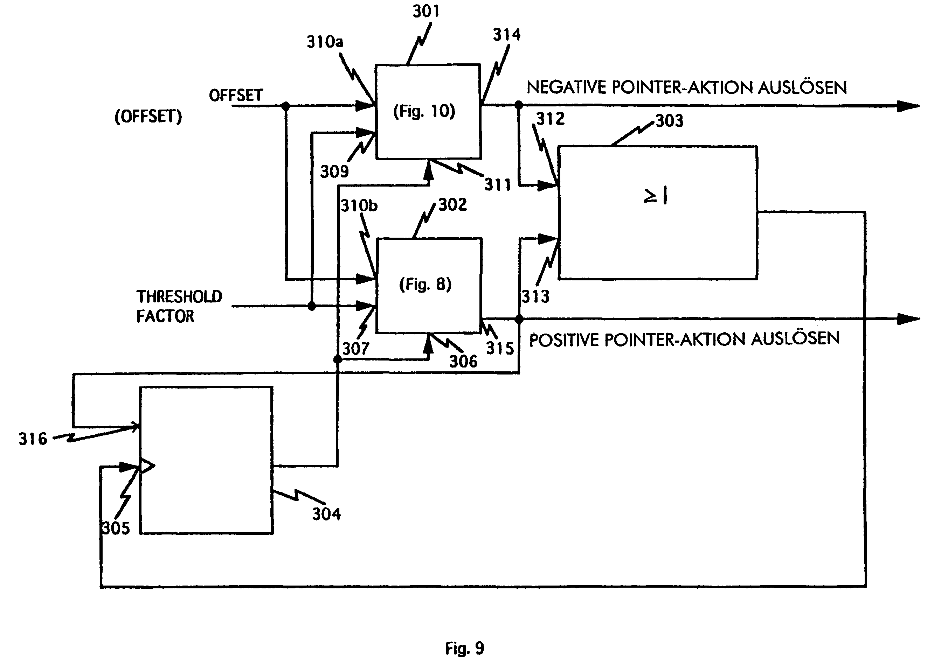

Einem mit dem Ausgang 290 des zweiten Blocks 20 verbundenen Eingang 310 wird der Änderungswert OFFSET zugeführt. Ausgänge 314, 315 des zweiten Blockes 20 sind mit einer nicht gezeigten Rahmenbaugruppe verbunden, durch die Rahmen unter Berücksichtigung von positiven und negativen Stopfaktionen gebildet werden. Details des dritten Blocks 30 sind in Fig. 9, Fig. 10 und Fig. 11 gezeigt.

In Fig. 4 ist wie bereits erwähnt eine detaillierte Darstellung des ersten Blocks 10 gezeigt. Eine Zähleinrichtung 101 zählt die von einem vorhergehenden Netzknoten N-1 kommenden in eine Speichereinrichtung einzuschreibenden Rahmenbytes. Durch eine vom ankommenden STM-1 Signal abgeleiteten Takt des vorhergehenden Netzknotens N-1 wird die Zähleinrichtung 101 mit jedem Taktimpuls, der einem Takteingang 107 zugeführt ist, um Eins erhöht. Da der Rahmen eines STM-1 Signals 2430 Bytes hat, zählt die Zähleinrichtung 101 Modulo 2430, d.h. sobald 2429 Rahmenbytes gezählt wurden, fängt die Zähleinrichtung 101 wieder bei Null an. Ein Ausgang 122 der Zähleinrichtung 101 ist mit einem Eingang 109 einer Subtrahiereinrichtung 103 verbunden.

Eine weitere Zähleinrichtung 102 zählt Rahmenbytes, die aus dem Speicher ausgelesen werden, um einen neuen Rahmen zu bilden. Dieser Zähleinrichtung 102 wird der interne Takt des Netzknotens N über einen Takteingang 108 zugeführt; bei jedem Taktimpuls wird auch diese Zähleinrichtung 102 um Eins erhöht, wobei das Zählen Modulo 2430 erfolgt. Ein Ausgang 123 der Zähleinrichtung 102 ist mit einem weiteren Eingang 110 der Subtrahiereinrichtung 103 verbunden, die die Zählerstände der beiden Zähleinrichtungen 101, 102 vergleicht (Modulo 2430). An einem Ausgang 121 der Subtrahiereinrichtung 103 tritt zum Abfragezeitpunkt $T_i$ ein (momentaner) Differenzwert $\Delta_i$ aus, der einem Eingang 111 eines Registers 105 und einem Eingang 117 einer weiteren Subtrahiereinrichtung 106 (Modulo 2430) zugeführt wird. Das Register 105 speichert den (momentanen) Differenzwert $\Delta_i$ solange, bis einem Eingang 112 ein Taktimpuls zugeführt wird. Dann tritt der gespeicherte und verzögerte Differenzwert $\Delta_{i-1}$ an einem Ausgang 120 des Registers 105 aus und wird einem weiteren Eingang 116 der Subtrahiereinrichtung 106 zugeführt. Diese Subtrahiereinrichtung 106 bildet die Änderung $\Delta_i - \Delta_{i-1}$ des Differenzwertes $\Delta_i$, der an einem Ausgang 118 austritt.

Den Taktimpuls für das Register 105 erzeugt eine Takteinrichtung 104. Ein Eingang 113 dieser Takteinrichtung 104 ist mit einem Ausgang 114 der Zähleinrichtung 102 und ein Ausgang 119 der Takteinrichtung 104 ist mit dem Eingang 112 des Registers 105 verbunden. Diese Takteinrichtung 104 bestimmt einen Zeitpunkt (Triggerzeitpunkt), der vom STM-1 Signal abhängig ist: Für den Fall, daß ein STM-1 Signal mit einem TU-3 vorliegt, wird nach jedem vierten Rahmen abgetastet, und im Fall, daß ein STM-1 Signal mit einem TU-11 oder TU-12 vorliegt, wird nach jedem 16ten Rahmen abgetastet.

An dem Ausgang 114 der Zähleinrichtung 102 tritt der Überlaufindikator ROLL-OVER aus, der anzeigt, wann der Zähler den Wert 2429 überschritten hat: Nach jedem Rahmen (2430 Bytes) hat der Überlaufindikator ROLL-OVER somit den Zustand "1".

In Fig. 5 ist eine detailliertere Darstellung des zweiten Blockes 20 (Fig. 3) gezeigt. Der in Fig. 4 gezeigte Ausgang 118 der Subtrahiereinrichtung 106 ist mit einem Eingang 260 einer Addiereinrichtung 240 (Modulo 2430) verbunden. Aus dem Korrekturfaktor LEAK, der der Addiereinrichtung 240 über einen Eingang 250 zugeführt wird, und der Änderung $\Delta_i - \Delta_{i-1}$ des Differenzwertes $\Delta_i$ (Eingang 260) bildet die Addiereinrichtung 240 zum Zeitpunkt $T_i$ den Änderungswert OFFSET, der an dem Ausgang 290 des zweiten Blockes 20 austritt.

Weitere in Fig. 5 gezeigte Einrichtungen sind:

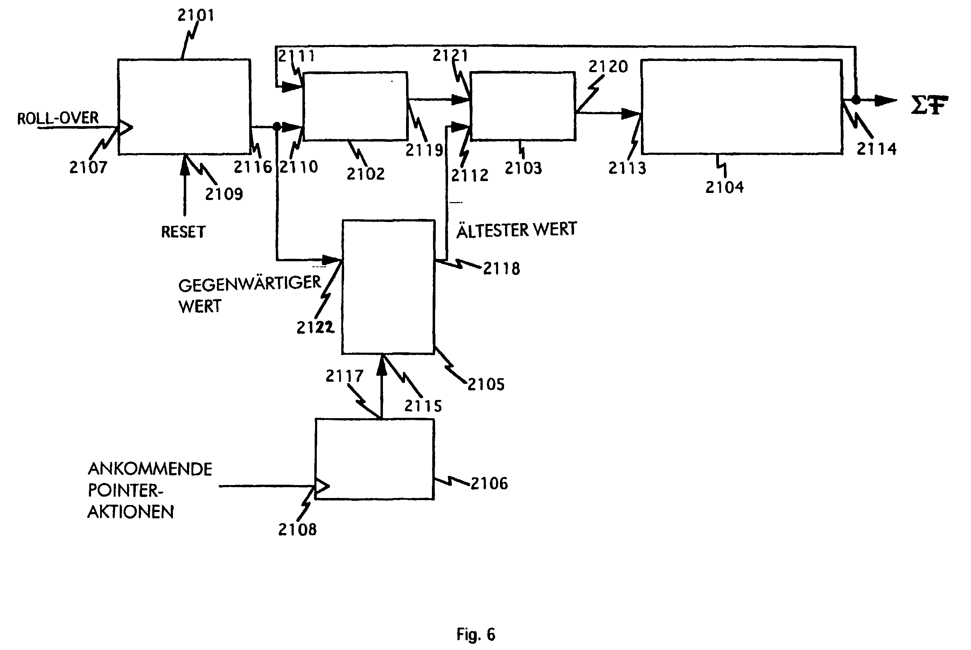

- Eine Einrichtung 210 zum Zählen der Anzahl von Rahmen, die während der letzten K Pointer-Aktionen angekommen sind. An einem Ausgang 2114 tritt die Anzahl der Rahmen $\Sigma$ F aus. Details dieser Einrichtung 210 sind in Fig. 6 gezeigt.

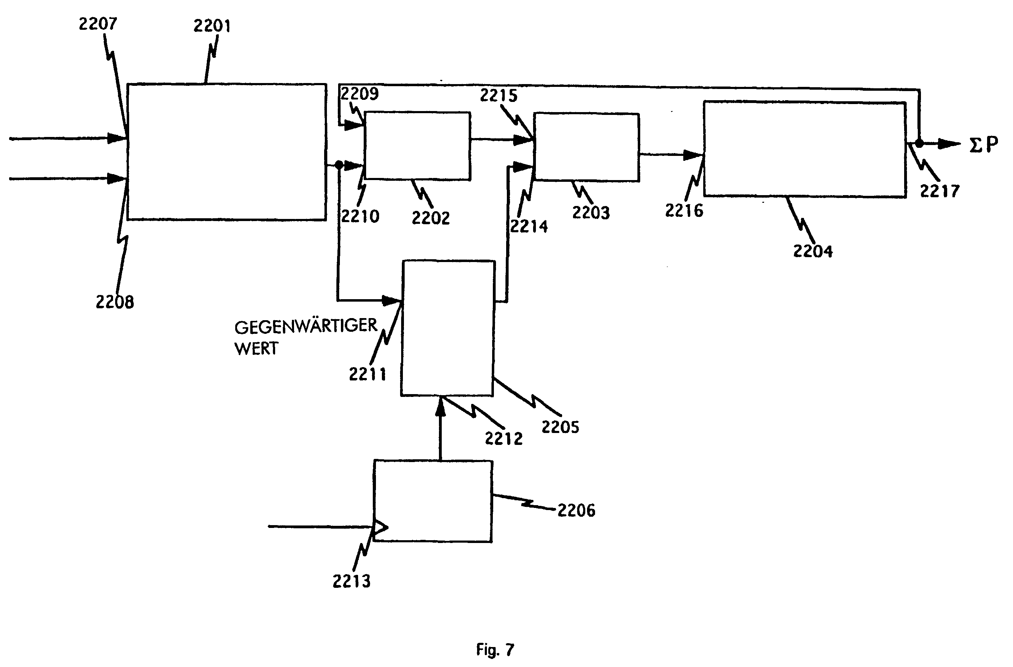

- Eine Einrichtung 220 zum Zählen der Anzahl und Art, d.h. der positiven oder negativen Pointer-Aktionen der letzten K Pointer-Aktionen, die angekommen sind. An einem Ausgang 2217 tritt die Summe der Pointer-Aktionen $\Sigma$ P aus. Details dieser Einrichtung 220 sind in Fig. 7 gezeigt.

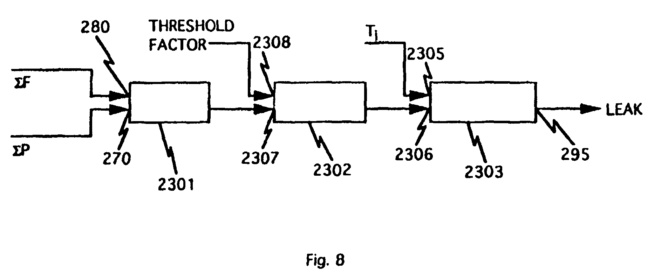

- Eine Einrichtung 230 zum Berechnen des Korrekturfaktors LEAK, die einen mit dem Ausgang 2114 verbundenen Eingang 280, einen mit dem Ausgang 2217 verbunden Eingang 270 und einen mit dem Eingang 250 verbundenen Ausgang 295 hat. Details dieser Einrichtung 230 sind in Fig. 8 gezeigt.

In Fig. 6 sind, wie bereits erwähnt, Details der Einrichtung 210 gezeigt. Um die Anzahl der Rahmen zu zählen, hat die Einrichtung 210 eine Rahmenzähleinrichtung 2101, die einen Eingang 2107 für den Überlaufindikator ROLL-OVER hat. Nach 2430 Bytes, also nach einem Rahmen wird die Rahmenzähleinrichtung 2101 jeweils um Eins erhöht. Ein Reseteingang 2109 dient dazu, die Rahmenzähleinrichtung 2101, nach jeder vom vorhergehenden Netzknoten ankommenden Pointer-Aktion auf Null zurückzusetzen. Ein Ausgang 2116 der Rahmenzähleinrichtung 2101 ist mit einem Eingang 2110 einer Addiereinrichtung 2102 und mit einem Eingang 2122 eines Speichers 2105, z.B. einem FIFO-Speicher, verbunden. Dieser Speicher 2105 speichert den Zählerstand (K-1) der Rahmenzähleinrichtung 2101. Ein weiterer Eingang 2115 des Speichers 2105 ist mit einem Ausgang 2117 eines Adresszählers 2106 verbunden, der die an einem Eingang 2108 ankommenden Pointer-Aktionen Modulo (K-1) zählt.

Dadurch wird die Leseadresse des Speichers 2105 festgelegt, deren Inhalt (der zuletzt gespeicherte Wert der Rahmenzähleinrichtung) über einen Ausgang 2118 einem Eingang 2112 einer Subtrahiereinrichtung 2103 zugeführt wird.

Die Addiereinrichtung 2102 addiert die momentane Anzahl der Rahmen und die Anzahl der Rahmen $\Sigma$ F, die während der letzten K ankommenden Pointer-Aktionen aufgetreten sind. Diese Summe wird über einen Ausgang 2119 einem Eingang 2121 der Subtrahiereinrichtung 2103 zugeführt. In dieser Subtrahiereinrichtung 2103 wird der Inhalt der Schreib-/Leseadresse des Speichers 2105 von der Summe der Addiereinrichtung 2102 subtrahiert. Ein Ausgang 2120 der Subtrahiereinrichtung 2103 ist mit einem Eingang 2113 einer Speichereinrichtung 2104 verbunden, die die Anzahl von Rahmen zwischen den ankommenden Pointer-Aktionen speichert. Der Speicher 2105 speichert den vom Eingang 2122 kommenden Wert unter der Adresse, die durch den am Eingang 2115 anliegenden Wert bestimmt ist. An einem Ausgang 2114, der auch mit dem Eingang 2111 der Addiereinrichtung 2102 verbunden ist, tritt die bereits erwähnte Anzahl der Rahmen $\Sigma$ F aus. Details der Einrichtung 220 sind in Fig. 7 gezeigt, deren struktureller Aufbau dem der Fig. 6 entspricht. Auch in Fig. 7 gibt es eine Addiereinrichtung 2202, mit zwei Eingängen 2209, 2210 und einem Ausgang, eine Subtrahiereinrichtung 2203, mit zwei Eingängen 2214, 2215 und einem Ausgang, eine Speichereinrichtung 2204, mit einem Eingang 2216 und einem Ausgang 2217, einem Speicher 2205 (FIFO-Speicher), mit zwei Eingängen 2211, 2212 und einem Ausgang, und einem Adresszähler 2206, mit einem Eingang 2213 und einem Ausgang.

Eine Zähleinrichtung 2201 hat einen Eingang 2207 für ankommende positive Pointer-Aktionen, einen Eingang 2208 für ankommende negative Pointer-Aktionen und einen Ausgang, der mit dem Eingang 2210 der Addiereinrichtung 2202 und dem Eingang 2211 des Speichers 2205 verbunden ist. Durch diese Zähleinrichtung 2201 wird die Art der ankommenden Pointer-Aktionen gezählt, d.h. bei jeder ankommenden positiven Pointer-Aktion wird der Zähler um Eins erhöht und bei jeder ankommenden negativen Pointer-Aktion wird der Zähler um Eins erniedrigt.

Die mit der Subtrahiereinrichtung 2203 verbundene Speichereinrichtung 2204 speichert die Anzahl und Art der letzten angekommenen Pointer-Aktionen $\Sigma$ P.

Die in Fig. 6 und Fig. 7 berechneten Größen $\Sigma$ P und $\Sigma$ F werden der in Fig. 5 gezeigten Einrichtung 230 zum Berechnen des Korrekturfaktors LEAK zugeführt, einem in Fig. 8 gezeigten Eingang 280, der der Eingang einer Dividiereinrichtung 2301 ist, wird die Größe $\Sigma$ F und einem Eingang 270 der Dividiereinrichtung 2301 wird die Größe $\Sigma$ P zugeführt. Das Teilergebnis der Dividiereinrichtung 2301 wird einem Eingang 2307 einer Multipliziereinrichtung 2302 zugeführt, die einen einem Eingang 2308 zugeführten konstanten Wert THRESHOLD FACTOR mit dem Teilergebnis multipliziert. Dieses Multiplizierergebnis wird einem Eingang 2306 einer weiteren Multipliziereinrichtung 2303 zugeführt.

Einem weiteren Eingang 2305 der Multipliziereinrichtung 2303 wird ein Faktor zugeführt, der vom Abtastzeitpunkt $T_i$ abhängig ist. Für den Fall, daß das STM-1 Signal einen TU-3 hat, ist $T_i$ = 4 und für den Fall, daß das STM-1 Signal einen TU-11 oder TU-12 hat, ist $T_i$ = 16. An dem Ausgang 295 der Multipliziereinrichtung 2303, der zugleich der Ausgang 295 der Einrichtung 230 ist, tritt der Korrekturfaktor LEAK aus.

Die in Fig. 8 gezeigte Einrichtung 230 ist ein Ausführungsbeispiel, durch das folgende Gleichung für den Korrekturfaktor LEAK(N) am Netzknoten N realisiert ist:

$$\text{LEAK(N)} = T_i \cdot \text{THRESHOLD FACTOR} \cdot \frac{\Sigma\,P}{\Sigma\,F}$$

In Fig. 9 ist eine detailliertere Darstellung des dritten Blocks 30 gezeigt. In dieser Darstellung sind eine Vergleichseinrichtung 301 für den oberen Schwellenwert U_THRESH, eine Vergleichseinrichtung 302 für den unteren Schwellenwert L_THRESH, ein Register 304 und ein ODER-Gatter 303 gezeigt. Den beiden Vergleichseinrichtungen 301, 302 ist jeweils über einen Eingang 309, 307 der konstante Wert THRESHOLD FACTOR und über einen Eingang 310a, 310b der Änderungswert OFFSET zugeführt. Diese Vergleichseinrichtungen 301, 302 vergleichen somit den Änderungswert OFFSET mit dem oberen und unteren Schwellenwert U_THRESH, L_THRESH. Ist der Änderungswert OFFSET zum Abtastzeitpunkt $T_i$ größer als der obere Schwellenwert U_THRESH, hat ein Ausgang 314 der Vergleichseinrichtung 301 den Zustand "1", d.h. es wird eine negative Pointer-Aktion ausgelöst.

Ist der Änderungswert OFFSET zum Abtastzeitpunkt $T_i$ kleiner als der untere Schwellenwert L_THRESH, hat ein Ausgang 315 der Vergleichseinrichtung 302 den Zustand "1", d.h. es wird eine positive Pointer-Aktion ausgelöst.

Ein Eingang 312 des ODER-Gatters 303 ist mit dem Ausgang 314 der Vergleichseinrichtung 301 und ein Eingang 313 des ODER-Gatters 301 ist mit dem Ausgang 315 der Vergleichseinrichtung 302 verbunden. Ein Ausgang des ODER-Gatters, der mit einem Eingang 305 des Registers 304 verbunden ist, hat immer dann den Zustand "1", wenn einer der beiden Eingänge 312, 313 den Zustand "1" hat. Ein Fall, daß beide Eingänge 312, 313 den Zustand "1" haben, ist zu vermeiden.

Ein weiterer Eingang 316 des Registers 304 ist mit dem Ausgang 315 der Vergleichseinrichtung 302 verbunden. Das Register 304 speichert die Art der letzten Pointer-Aktion. Nach jeder neuen Pointer-Aktion wird die Art der vorhergehenden Pointer-Aktion an einem Ausgang des Registers 304 ausgegeben, d.h. der Zustand des Ausgangs ist "1", wenn eine positive Pointer-Aktion vorlag, und wenn eine negative Pointer-Aktion vorlag, ist der Zustand "0". Der Ausgang des Registers 304 ist mit einem Eingang 306 der Vergleichseinrichtung 302 und mit einem Eingang 311 der Vergleichseinrichtung 301 verbunden.

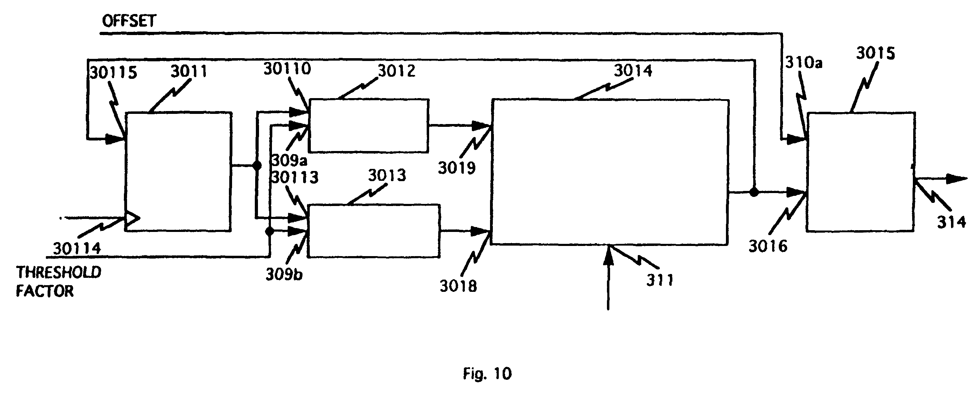

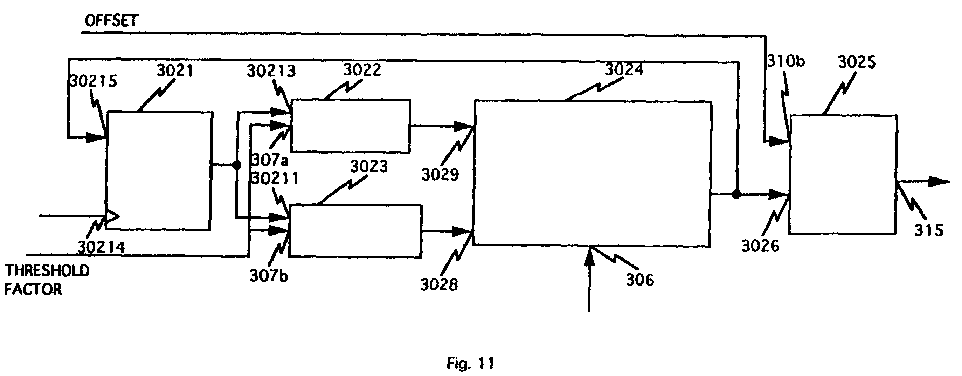

In Fig. 10 und Fig. 11 sind Details der Vergleichseinrichtungen 301, 302 gezeigt. Da diese Vergleichseinrichtungen 301, 302 einen gleichen strukturellen Aufbau haben, wird deren Aufbau nur anhand von Fig. 10 beschrieben. Bezugszeichen, die die Fig. 11 betreffen, sind in Klammern angegeben. Ein Ausgang einer Speichereinrichtung (Register) 3011 (3021) ist mit einem Eingang 30110 (30213) einer Addiereinrichtung 3012 (3022) (Modulo 2430) und mit einem Eingang 30113 (30211) einer Subtrahiereinrichtung 3013 (3023) (Modulo 2430) verbunden. Einem weiteren Eingang 309a (307a) der Addiereinrichtung 3012 (3022) und einem weiteren Eingang 309b (307b) der Subtrahiereinrichtung 3013 (3023) ist der konstante Wert THRESHOLD FACTOR zugeführt. Die Addiereinrichtung 3012 (3022) ist mit einem Eingang 3019 (3029) einer Multiplexeinrichtung 3014 (3024) und die Subtrahiereinrichtung 3013 (3023) ist mit einem Eingang 3018 (3028) der Multiplexeinrichtung 3014 (3024) verbunden.

Einem Eingang 311 (306) der Multiplexeinrichtung 3014 (3024) wird die Art der letzten Pointer-Aktion zugeführt. Durch die Multiplexeinrichtung 3014 (3024) wird die Summe der Addiereinrichtung 3012 (3022) ausgewählt, d.h. auf einen Ausgang der Multiplexeinrichtung 3014 (3023) durchgeschaltet, wenn die letzte Pointer-Aktion eine negative Pointer-Aktion war. Im anderen Fall, d.h. dann wenn die letzte Pointer-Aktion eine positive Pointer-Aktion war, wird das Ergebnis der Subtraktion der Subtrahiereinrichtung 3013 (3023) ausgewählt. Der Ausgang der Multiplexeinrichtung 3014 (3024) ist mit einem Eingang 30115 (30215) der Speichereinrichtung 3011 (3021) und mit einem Eingang 3016 (3026) eines Vergleichers 3015 (3025) verbunden. Einem weiteren Eingang 310a (310b) der Vergleichseinrichtung 3015 (3025) wird der Änderungswert OFFSET zugeführt. Der Ausgang 314 (315), der zugleich der Ausgang des dritten Blockes 30 ist, des Vergleichers 3015 (3025) hat dann den Zustand "1", wenn der Änderungswert OFFSET größer (Fig. 11: kleiner) als der vom Ausgang der Multiplexeinrichtung 3014 (3024) kommende Wert ist.

In Fig. 10 speichert die Speichereinrichtung 3011 den oberen Schwellenwert, der mit jeder Pointer-Aktion, die einem Eingang 30114 zugeführt wird, aktualisiert wird: Z.B. wird mit jeder negativen Pointer-Aktion der vom Ausgang der Multiplexeinrichtung 3014 kommende Wert in die Speichereinrichtung 3011 eingespeichert. Der aktualisierte obere Schwellenwert wird dann durch die Addiereinrichtung 3012 um den konstanten Wert THRESHOLD FACTOR erhöht und durch die Subtrahiereinrichtung 3013 um den konstanten Wert THRESHOLD FACTOR erniedrigt.

In Fig. 11 speichert die Speichereinrichtung 3021 den unteren Schwellenwert, der mit jeder Pointer-Aktion, die einem Eingang 30214 zugeführt wird, aktualisiert wird. Der aktualisierte untere Schwellenwert wird dann durch die Addiereinrichtung 3021 um den konstanten Wert THRESHOLD FACTOR erhöht und durch die Subtrahiereinrichtung 3023 um den konstanten Wert THRESHOLD FACTOR erniedrigt.

Im folgenden wird die Funktion der Stopfeinrichtung, des Pointer Prozessors, anhand eines STM-1 Signals beschrieben, das eine Bitfolgefrequenz von 155,52 kbit/s hat. Die Rahmenbytes werden mit einer Frequenz von 19,44 MHz übertragen.

Die Zähleinrichtung 101 des Netzknotens N wird durch den aus einem ankommenden STM-1 Signal abgeleiteten Takt des vorhergehenden Netzknotens N-1 getaktet; sie wird mit jedem ankommenden Rahmenbyte um Eins erhöht (Modulo 2430). Die Zähleinrichtung 102 des Netzknotens N wird durch den internen Takt des Netzknotens N getaktet; sie wird mit jedem ausgesendeten Rahmenbyte um Eins erhöht (Modulo 2430).

In dem Netzknoten N wird der Differenzwert $\Delta_i$ aus der Differenz der Zählerwerte der Zähleinrichtungen 101, 102 gebildet. Ist der aus dem ankommenden STM-1 Signal abgeleitete Takt schneller als der interne Takt des Netzknotens N, kommen Rahmenbytes eines Virtuellen Containers, z.B. VC-4, schneller an, als solche VC-4 Bytes ausgesendet werden. Die Zähleinrichtung 101 wird dadurch schneller erhöht als die Zähleinrichtung 102 mit der Folge, daß der Differenzwert $\Delta_i$ größer wird. Im Fall, daß der interne Takt schneller ist, wird dagegen der Differenzwert $\Delta_i$ kleiner.

Als Kriterium dafür, wann eine Pointer-Aktion auszuführen ist, wird im erfindungsgemäßen Pointer-Prozessor das Ergebnis eines Vergleichs des Änderungswertes OFFSET mit den Schwellenwerten U_THRESH, L_THRESH verwendet. Daraus wird auch die Art der jeweiligen Pointer-Aktion bestimmt. Gemäß einem Ausführungsbeispiel werden nach jeder Pointer-Aktion die Schwellenwerte U_THRESH, L_THRESH um einen konstanten Wert, dem THRESHOLD FACTOR, verändert, der von der Art der "Tributary Unit TU" abhängig ist:

Für den Fall einer TU-3 ist der THRESHOLD FACTOR gleich 270/85, für den Fall einer TU-11 ist der THRESHOLD FACTOR gleich 2430/26 und für den Fall einer TU-12 ist der THRESHOLD FACTOR gleich 2430/35.

Mit Hilfe dieses THRESHOLD-FACTORS werden, wenn es keine ankommenden Pointer-Aktionen gibt, die erzeugten Pointer-Aktionen gleichmäßig verteilt. Das bedeutet z.B. für den TU-11 Fall, daß in der Zeit, die benötigt wird, bis zwischen dem ankommenden STM-1 Signal und dem abgehenden STM-1 Signal eine Phasendifferenz von einem Rahmen (2430 Bytes) besteht, 26 Pointer-Aktionen gleichmäßig verteilt werden. Im folgenden wir erläutert, wie mit Hilfe der Erfindung gleichmäßig verteilte abgehende Pointer-Aktionen erzeugt werden, wenn ankommende Pointer-Aktionen vorhanden sind.

Um dies zu erreichen, wird im betrachteten Netzknoten n zu jedem Abfragezeitpunkt $T_i$ der Korrekturfaktor LEAK berechnet, der zur Änderung $\Delta_i - \Delta_{i-1}$ des Differenzwertes $\Delta_i$ addiert wird.

Diese Summe wird zum zuletzt gespeicherten Änderungswert OFFSET addiert, d.h. OFFSET = [OFFSET + ($\Delta_i - \Delta_{i-1}$) + LEAK]. Der Änderungswert OFFSET kann auf einen Anfangswert, z.B. Null, gesetzt sein. Durch den Korrekturfaktor LEAK wird somit die Änderung $\Delta_i - \Delta_{i-1}$ des Differenzwertes $\Delta_i$ korrigiert. Der Korrekturfaktor LEAK ist u.a. abhängig von der Anzahl von Rahmen, die in der Zeit zwischen zwei aufeinander folgenden ankommenden Pointer-Aktionen gezählt werden, und von der Anzahl und Art der letzten K ankommenden Pointer-Aktionen. Diese Information über die ankommenden Pointer-Aktionen wird im Netzknoten aus dem ankommenden STM-1 Signal gewonnen, und zwar indem die H1 und H2 Pointer-Bytes eines ankommenden Rahmens ausgewertet werden.

Als Beispiel wird ein SDH-Übertragungssystem mit drei Netzknoten 1, 2, 3 angenommen, wobei die Netzknoten 2, 3 idealerweise 0 ppm Taktabweichung haben und der Takt des Netzknotens 1 eine positive Taktabweichung hat. Durch den Pointer-Prozessor werden im Netzknoten 2 gleichmäßig verteilte negative Pointer-Aktionen erzeugt. Diese negativen Pointer-Aktionen erhöhen den Füllstand der im Netzknoten 3 vorhandenen Speichereinrichtung für die Virtuellen Container VC. Mit der Annahme, daß die Takte der Netzknoten 2, 3 synchron sind, ändert sich der Differenzwert

$\Delta_i$ nicht, d.h. $\Delta_i - \Delta_{i-1} = 0$. Durch den Pointer-Prozessor wird jedoch verhindert, daß die Speichereinrichtung im Netzknoten 3 überläuft. Mit dem Quotienten $\Sigma P / \Sigma F$ wird im Netzknoten 3 der durchschnittliche Abstand der ankommenden Pointer-Aktionen berechnet. Um vom Netzknoten 3 ausgesendete Pointer-Aktionen mit dem gleichen Abstand zu erzeugen, wird der Änderungswert OFFSET regelmäßig um den konstanten Wert verändert.

**Patentansprüche**

1. Synchrones digitales Übertragungssystem,

   - bei dem eine Anzahl von Netzknoten vorhanden ist, die jeweils einen festgelegten internen Takt haben,

   - bei dem jeder Netzknoten mindestens eine Stopfeinrichtung hat, um durch positive oder negative Stopfaktionen ein ankommendes Signal an den internen Takt des Netzknotens anzupassen, und

   - bei dem jeder Netzknoten mindestens eine Speichereinrichtung hat, die gesteuert von der Stopfeinrichtung Nutzinformationsbytes eines Rahmens des ankommenden Signals mit dem internen Takt eines vorhergehenden Netzknotens speichert, und die Nutzinformationsbytes mit dem internen Takt des Netzknotens ausgibt,

   **dadurch gekennzeichnet,**

   - **daß** die Stopfeinrichtung erste Mittel (10) hat, um ankommende und abgehende Rahmenbytes zu zählen, daraus zu festgelegten Zeitpunkten (Ti) einen Differenzwert ($\Delta_i$) und eine Änderung ($\Delta_i - \Delta_{i-1}$) des Differenzwertes ($\Delta_i$) zu berechnen,

   - **daß** die Stopfeinrichtung zweite Mittel (20) hat, um einen Änderungswert (OFFSET) zu berechnen, der von der Änderung ($\Delta_i - \Delta_{i-1}$) des Differenzwertes ($\Delta_i$) und einem Korrekturfaktor (LEAK), der Pointer-Aktionen im ankommenden Signal berücksichtigt, abhängig ist, und

   - **daß** die Stopfeinrichtung dritte Mittel (30) hat, um zu den festgelegten Zeitpunkten (Ti) den Änderungswert (OFFSET) mit einem oberen und unteren Schwellenwert (U THRESH, L THRESH) zu vergleichen, um eine positive Stopfaktion auszulösen, wenn der Änderungswert (OFFSET) kleiner als der untere Schwellenwert (L THRESH) ist, und um eine negative Stopfaktion auszulösen, wenn der Änderungswert (OFFSET) größer als der obere Schwellenwert (U THRESH) ist.

2. Stopfeinrichtung für einen in einem synchronen digitalen Übertragungssystem vorhandenen Netzknoten, die durch positive oder negative Stopfaktionen ein ankommendes Signal an einen internen Takt des Netzknotens anpaßt, so daß ein von dem Netzknoten ausgesendetes Signal den internen Takt des Netzknotens hat,
   **dadurch gekennzeichnet,**

   - **daß** die Stopfeinrichtung erste Mittel (10) hat, um Rahmenbytes des ankommenden Signals und Rahmenbytes des ausgesendeten Signals zu zählen, daraus zu festgelegten Zeitpunkten (Ti) einen Differenzwert ($\Delta_i$) und eine Änderung ($\Delta_i - \Delta_{i-1}$) des Differenzwertes ($\Delta_i$) zu berechnen,

   - **daß** die Stopfeinrichtung zweite Mittel (20) hat, um einen Änderungswert (OFFSET) zu berechnen, der von der Änderung ($\Delta_i - \Delta_{i-1}$) des Differenzwertes ($\Delta_i$) und einem Korrekturfaktor (LEAK), der Pointer-Aktionen im ankommenden Signal berücksichtigt, abhängig ist, und

   - **daß** die Stopfeinrichtung dritte Mittel (30) hat, um zu den festgelegten Zeitpunkten (Ti) den Änderungswert (OFFSET) mit einem oberen und unteren Schwellenwert (U THRESH, L THRESH) zu vergleichen, um eine positive Stopfaktion auszulösen, wenn der Änderungswert (OFFSET) kleiner als der untere Schwellenwert (L THRESH) ist, und um eine negative Stopfaktion auszulösen, wenn der Änderungswert (OFFSET) größer als der obere Schwellenwert (U THRESH) ist.

3. Synchrones digitales Übertragungssystem nach Anspruch 1 oder Stopfeinrichtung nach Anspruch 2, **dadurch gekennzeichnet, daß** die Stopfeinrichtung nach jeder positiven Stopfaktion die beiden Schwellenwerte (U_THRESH, L_THRESH) um einen konstanten Wert (THRESHOLD FACTOR) erniedrigt, und nach jeder negativen Stopfaktion um den konstanten Wert erhöht.

4. Synchrones digitales Übertragungssystem nach Anspruch 1 oder Stopfeinrichtung nach Anspruch 2, **dadurch gekennzeichnet, daß** die Stopfeinrichtung bei konstanten Schwellenwerten (U_THRESH, L_THRESH) nach jeder positiven Stopfaktion den Änderungswert (OFFSET) um einen konstanten Wert (THRESHOLD FACTOR) erhöht, und nach jeder negativen Stopfaktion den Änderungswert (OFFSET) um den konstanten Wert erniedrigt.

5. Verfahren zum Auslösen von Stopfaktionen in einem synchronen digitalen Übertragungssystem,

- bei dem durch mindestens eine in einem Netzknoten vorhandene Stopfeinrichtung positive oder negative Stopfaktionen ausgelöst werden,

- bei dem Nutzinformationsbytes eines Rahmens eines ankommenden Signals mit einem Takt eines vorhergehenden Netzknotens in einer Speichereinrichtung gespeichert werden, und

- bei dem die Nutzinformationsbytes mit einem internen Takt des Netzknotens aus der Speichereinrichtung ausgegeben werden, so daß ein vom Netzknoten ausgesendetes Signal den internen Takt des Netzknotens hat,

**dadurch gekennzeichnet,**

- **daß** durch erste Mittel (10) die Rahmenbytes des ankommenden Signals und die Rahmenbytes des ausgesendeten Signals gezählt werden, um daraus zu festgelegten Zeitpunkten (Ti) einen Differenzwert ($\Delta_i$) und eine Änderung ($\Delta_i$ - $\Delta_{i-1}$) des Differenzwertes ($\Delta_i$) zu berechnen,

- **daß** durch zweite Mittel (20) ein Änderungswert (OFFSET) berechnet wird, der von der Änderung ($\Delta_i$ - $\Delta_{i-1}$) des Differenzwertes ($\Delta_i$) und einem Korrekturfaktor (LEAK), der Pointer-Aktionen im ankommenden Signal berücksichtigt, abhängig ist, und

- **daß** durch dritte Mittel (30) zu den festgelegten Zeitpunkten (Ti) der Änderungswert (OFFSET) mit einem oberen und unteren Schwellenwert (U THRESH, L THRESH) verglichen wird, um eine positive Stopfaktion auszulösen, wenn der Änderungswert (OFFSET) kleiner als der untere Schwellenwert (L THRESH) ist, und um eine negative Stopfaktion auszulösen, wenn der Änderungswert (OFFSET) größer als der obere Schwellenwert (U THRESH) ist.

6. Verfahren zum Auslösen von Stopfaktionen gemäß Anspruch 5, **dadurch gekennzeichnet, daß** nach jeder positiven Stopfaktion die beiden Schwellenwerte (U_THRESH, L_THRESH) um einen konstanten Wert (THRESHOLD FACTOR) erniedrigt, und nach jeder negativen Stopfaktion um den konstanten Wert erhöht werden.

7. Verfahren zum Auslösen von Stopfaktionen gemäß Anspruch 5, **dadurch gekennzeichnet, daß** bei konstanten Schwellenwerten (U_THRESH, L_THRESH) nach jeder positiven Stopfaktion der Änderungswert (OFFSET) um einen konstanten Wert (THRESHOLD FACTOR) erhöht wird, und nach jeder negativen Stopfaktion um den konstanten Wert herabgesetzt wird.

**Claims**

1. Synchronous digital transmission system,

- in which there is a number of network nodes each having a fixed internal clock,
- in which each network node has at least one stuffing device to adapt an incoming signal to the internal clock of the network node via a positive or negative stuffing action, and
- in which each network node has at least one storage device which, controlled by the stuffing device, stores bytes of useful information of a frame of the incoming signal with the internal clock of a preceding network node and outputs the bytes of useful information with the internal clock of the network node,

**characterised in**

- **that** the stuffing device has first means (10) to count incoming and outgoing frame bytes, to calculate a differential value ($\Delta_i$) and a change ($\Delta_i$ - $\Delta_{i-1}$) in the differential value ($\Delta_i$) therefrom at fixed instants (Ti),
- in that the stuffing device has second means (20) to calculate a change value (OFFSET) dependent on the change ($\Delta_i$ - $\Delta_{i-1}$) in the differential value ($\Delta_i$) and a correction factor (LEAK), which takes into account the pointer actions in the incoming signal,
- and in that the stuffing device has third means (30) to compare the change value (OFFSET) with an upper and lower threshold (U THRESH, L THRESH) at the fixed instants (Ti) to trigger a positive stuffing action if the change value (OFFSET) is less than the lower threshold (L THRESH) and to trigger a negative stuffing action if the change value (OFFSET) is higher than the upper threshold (U THRESH).

2. Stuffing device for a network node present in a synchronous digital transmission system, which stuffing device adapts an incoming signal to an internal clock of the network node via positive or negative stuffing actions, so a signal emitted by the network node has the internal clock of the network node, **characterised in**

- **that** the stuffing device has first means (10) for counting frame bytes of the incoming signal and frame bytes of the emitted signal, to calculate a differential value ($\Delta_i$) and a change ($\Delta_i - \Delta_{i-1}$) in the differential value therefrom at fixed instants (Ti),

- in that the stuffing device has second means (20) to calculate a change value (OFFSET) dependent on the change ($\Delta_i - \Delta_{i-1}$) in the differential value ($\Delta_i$) and a correction factor (LEAK), which takes into account pointer actions in the incoming signal, and

- in that the stuffing device has third means (30) to compare the change value (OFFSET) with an upper and a lower threshold (U THRESH, L THRESH) at the fixed instants (Ti), to trigger a positive stuffing action if the change value (OFFSET) is less than the lower threshold (L THRESH) and to trigger a negative stuffing action if the change value (OFFSET) is higher than the upper threshold (U THRESH).

3. Synchronous digital transmission system according to claim 1 or stuffing device according to claim 2, **characterised in that** the stuffing device lowers the two thresholds (U_THRESH, L_THRESH) by a constant value (THRESHOLD FACTOR) after each positive stuffing action and raises them by the constant value after each negative stuffing action.

4. Synchronous digital transmission system according to claim 1 or stuffing device according to claim 2, **characterised in that** with constant thresholds (U_THRESH, L_THRESH) the stuffing device raises the change value (OFFSET) by a constant value (THRESHOLD FACTOR) after each positive stuffing action and lowers the change value (OFFSET) by the constant value after each negative stuffing action.

5. Method of triggering stuffing actions in a synchronous digital transmission system,

- in which positive or negative stuffing actions are triggered by at least one stuffing device present in a network node,

- in which bytes of useful information of a frame of an incoming signal are stored with a clock of a preceding network node in a storage device, and

- in which the bytes of useful information are output from the storage device with an internal clock of the network node, so a signal emitted by the network node has the internal clock of the network node,

**characterised in**

- **that** the frame bytes of the incoming signal and the frame bytes of the output signal are counted by first means (10) to calculate a differential value ($\Delta_i$) and a change ($\Delta_i - \Delta_{i-1}$) in the differential value ($\Delta_i$) therefrom at fixed instants (Ti),

- in that a change value (OFFSET) is calculated by the second means (20), the value being dependent on the change ($\Delta_i - \Delta_{i-1}$) in the differential value ($\Delta_i$), and a correction factor (LEAK) which takes into account pointer actions in the incoming signal, and

- in that the change value (OFFSET) is compared with an upper and a lower threshold (U THRESH, L THRESH) by third means (30) at the fixed instants (Ti) to trigger a positive stuffing action if the change value (OFFSET) is less than the lower threshold (L THRESH) and to trigger a negative stuffing action if the change value (OFFSET) is higher than the upper threshold (U THRESH).

6. Method of triggering stuffing actions according to claim 5, **characterised in that** the two thresholds (U_THRESH, L_THRESH) are lowered by a constant value (THRESHOLD FACTOR) after each positive stuffing action and are raised by the constant value after each negative stuffing action.

7. Method of triggering stuffing actions according to claim 5, **characterised in that** with constant thresholds (U_THRESH, L_THRESH) the change value (OFFSET) is raised by a constant value (THRESHOLD FACTOR) after each positive stuffing action and is lowered by the constant value after each negative stuffing action.

**Revendications**

1. Système de transmission numérique synchrone,

- présentant un nombre de noeuds de réseau ayant chacun une cadence d'horloge interne déterminée,

- où chaque noeud de réseau a au moins un dispositif de justification pour ajuster un signal entrant à la cadence d'horloge interne du noeud de réseau grâce à des actions de justification positives ou négatives

- où chaque noeud de réseau a au moins un dispositif d'enregistrement, qui, commandé par le dispositif de justification enregistre des octets d'information utile d'une trame d'un signal entrant avec la cadence d'horloge interne d'un noeud de réseau précédent et délivre les octets d'information utile avec la cadence d'horloge interne du noeud de réseau,

     **caractérisé en ce que**

- le dispositif de justification dispose de premiers moyens (10) pour compter les octets de trames entrant et sortant, et de calculer à partir de là, à des instants (Ti) déterminés, une valeur différentielle $\Delta_i$ et une variation $\Delta_i - \Delta_{i-1}$ de la valeur différentielle $\Delta_i$,
- le dispositif de justification dispose de seconds moyens (20) pour calculer une valeur de variation (OFFSET) , qui dépend de la variation $\Delta_i - \Delta_{i-1}$ de la valeur différentielle $\Delta i$ et d'un facteur de correction (LEAK), qui prend en compte des actions pointeur dans le signal entrant, et
- le dispositif de justification dispose de troisièmes moyens (30), pour comparer à des instants (Ti) déterminés la valeur de variation (OFFSET) avec une valeur seuil supérieure et une valeur seuil inférieure (U_TRESH , L_TRESH), pour déclencher une action de justification positive, quand la valeur de variation (OFFSET) est inférieure à la valeur seuil inférieure (L_TRESH), et pour déclencher une action de justification négative quand la valeur de variation (OFFSET) est supérieure à la valeur supérieure (U_TRESH).

2. Dispositif de justification pour noeud de réseau présent dans un système de transmission numérique synchrone, qui ajuste un signal entrant à la cadence d'horloge interne du noeud de réseau grâce à des actions de justification positives ou négatives, de telle sorte qu'un signal envoyé par un noeud de réseau a la cadence d'horloge interne du noeud de réseau,

   **caractérisé en ce que**

   - le dispositif de justification dispose de premiers moyens (10) pour compter les octets de trames du signal entrant et les octets de trames du signal envoyé, pour calculer à partir de là, à des instants (Ti) déterminés, une valeur différentielle $\Delta_i$ et une variation $\Delta_i - \Delta_{i-1}$ de la valeur différentielle $\Delta_i$,
   - le dispositif de justification dispose de seconds moyens (20) pour calculer une valeur de variation (OFFSET), qui dépend de la variation $\Delta_i - \Delta_{i-1}$ de la valeur différentielle $\Delta_i$ et d'un facteur de correction (LEAK), qui prend en compte des actions pointeur dans le signal entrant, et
   - le dispositif de justification dispose de troisièmes moyens (30), pour comparer à des instants (Ti) déterminés la valeur de variation (OFFSET) avec une valeur seuil supérieure et une valeur seuil inférieure (U_TRESH , L_TRESH), pour déclencher une action de justification positive, quand la valeur de variation (OFFSET) est inférieure à la valeur seuil inférieure (L_TRESH), et pour déclencher une action de justification négative quand la valeur de variation (OFFSET) est supérieure à la valeur supérieure (U_TRESH).

3. Système de transmission numérique synchrone selon la revendication 1 ou dispositif de justification selon la revendication 2, **caractérisés en ce que** le dispositif de justification abaisse après chaque action de justification positive les deux valeurs seuil (U_TRESH, L_TRESH) à une valeur constante (THRESHOLD FACTOR), les relève après chaque action de justification négative à une valeur constante.

4. Système de transmission numérique synchrone selon la revendication 1 ou dispositif de justification selon la revendication 2 **caractérisés en ce que** le dispositif de justification élève lors de valeurs seuil constantes (U_TRESH, L_TRESH), après chaque action de justification positive, la valeur de variation (OFFSET) à une valeur constante (THRESHOLD FACTOR) et abaisse après chaque action de justification négative la valeur de variation (OFFSET) à une valeur constante.

5. Procédé pour déclencher des actions de justification dans un système de transmission numérique synchrone,

   - où des actions de justification positives ou négatives sont déclenchées grâce à au moins un dispositif de justification présent dans un noeud de réseau,
   - où des octets d'information utile d'une trame d'un signal entrant sont enregistrés avec la cadence d'horloge d'un noeud de réseau précédent dans un dispositif d'enregistrement,
   - où les octets d'information utile sont délivrés avec une cadence d'horloge interne du noeud de réseau par le dispositif d'enregistrement de telle sorte qu'un signal envoyé par le noeud de réseau a la cadence d'horloge interne du noeud de réseau,

   **caractérisé en ce que**

   - grâce aux premiers moyens (10) les octets de trames du signal entrant et les octets de trames du signal envoyés sont comptés, pour calculer à partir de là, à des instants (Ti) déterminés, une valeur différentielle $\Delta_i$ et une variation $\Delta_i - \Delta_{i-1}$ de la valeur différentielle $\Delta_i$,
   - grâce aux seconds moyens (20) une valeur de variation (OFFSET) est calculée, qui dépend de la variation $\Delta_i - \Delta_{i-1}$ de la valeur différentielle $\Delta_i$ et d'un facteur de correction (LEAK), qui prend en compte des actions pointeur dans le signal entrant, et
   - grâce à de troisièmes moyens (30), la valeur de variation (OFFSET) est, à des instants (Ti) déterminés, comparée avec une valeur seuil supérieure et une valeur seuil inférieure (U_TRESH, L_TRESH), pour déclencher une action de justification positive, quand la valeur de variation (OFFSET) est inférieure à la valeur seuil inférieure (L_TRESH), et pour déclencher une action de justification négative quand la valeur de variation (OFFSET)est supérieure à la valeur supérieure (U_TRESH).

6. Procédé pour déclencher des actions de justification selon la revendication 5, **caractérisé en ce que** les deux valeurs seuil (U_TRESH, L_TRESH) sont après chaque action de justification positive abaissées à une valeur constante (THRESHOLD FACTOR) et élevées à la valeur constante après chaque action de justification négative.

7. Procédé pour déclencher des actions de justification selon la revendication 5, **caractérisé en ce que** la valeur de variation (OFFSET) est élevée lors de valeurs seuil constantes (U_TRESH, L_TRESH) après chaque action de justification positive à une valeur constante (THRESHOLD FACTOR) et abaissée à la valeur constante après chaque action de justification négative.

Fig. 1

Fig. 2

14

10

118

260

$\Delta_1 - \Delta_{l-1}$
ROLL-OVER

114

2107

20

(Fig. 4)

(Fig. 5)

OFFSET

290

30

310

(Fig. 9)

314

315

Fig. 3

Fig. 4

EP 0 727 887 B1

$\Delta_i - \Delta_{i-1}$

2114

(Fig. 6)

280

295

260

OFFSET

(Fig. 8)

210

LEAK

290

270

230

250

240

2217

(Fig. 7)

220

Fig. 5

Fig. 6

ROLL-OVER

2101

2107

2109

RESET

2116 2110

2111

2102

2119

2121

2103

2112

2120

2104

2113

2114

ΣF

GEGENWÄRTIGER
WERT

2122

ÄLTESTER WERT

2118

2105

2117

2115

ANKOMMENDE
POINTER-
AKTIONEN

2108

2106

EP 0 727 887 B1

17

ΣP

GEGENWÄRTIGER WERT

Fig. 7

Fig. 8

Fig. 9

Fig. 10

Fig. 11

OFFSET

THRESHOLD
FACTOR

30215 3021 30213 3022 3024 310b 3025
307a
30211 3023
30214 3029
307b 3028 3026 315
306

22

EP 0 727 887 B1